# EUROPEAN PATENT APPLICATION

(11) **EP 1 701 551 A2**
(43) Date of publication of application: **13.09.2006**
(21) Application number: 06101470.0
(22) Date of filing: 09.02.2006
(51) Int. Cl.: H04N 7/26

(54) **Signal processing apparatus and signal processing method**

(30) Priority: 10.03.2005 JP 2005067749
(71) Applicant: KABUSHIKI KAISHA TOSHIBA, Tokyo (JP)
(72) Inventor: Yoshida, Hitoshi Toshiba Corporation, Minato-ku, Tokyo 105-8001 (JP)
(74) Representative: Henkel, Feiler & Hänzel

(57) **Abstract**

A signal processing apparatus includes a comparing unit (37) which determines matching between a value of circulating counter (continuity_counter) described in a TS packet and a comparative value stored in a storing unit (38) and which updates the comparative value of the storing unit (38) to the value of the circulating counter (continuity_counter), an output unit (36) which outputs an input TS packet when mismatching is determined by the comparing unit (37) and which stops outputting of the input TS packet when matching is determined, and a control unit (25) which performs control to output a TS packet from the output unit (36) when a process in which the TS packet is discontinuous is requested.

## Description

The present invention relates to a signal processing apparatus and a signal processing method which are preferably used in a digital recording and reproducing apparatus which receives a transport stream sent by, for example, digital broadcasting to make it possible to record and reproduce the transport stream.

As is well known, in recent years, digitization of television broadcasting is moved ahead. For example, in Japan, not only satellite digital broadcasting such as BS (broadcasting satellite) digital broadcasting and 110° CS (communication satellite) digital broadcasting, but also digital terrestrial television broadcasting are started.

In digital broadcasting of this type, video data and audio data are compressed and encoded by an MPEG (moving picture experts group) scheme. As a transmitting scheme in the digital broadcasting, in general, an MPEG transport stream (TS) packet scheme is popularly employed.

In a digital broadcasting receiver which receives such digital broadcasting, a transmitted MPEG TS packet is received and subjected to demultiplex processing, decode (decoding) process, and the like to recover video data and audio data, so that video display and audio reproduction are performed.

At this time, a digital recording and reproducing apparatus which receives an MPEG TS transmitted by digital broadcasting to make it possible to record and reproduce the MPEG TS. In the digital recording and reproducing apparatus, the following applied configuration is supposed. That is, the received MPEG TS is recorded on large-capacity storing means such as a hard disk drive (HDD), and a user selects from a desired program from the large-capacity storage means to watch the program.

In the digital recording and reproducing apparatus, various special reproducing functions such as fast reproduction, jump to a target position, chapter skip, and A-B repeat for repeating a specific region which cannot be realized in watching an on-air program can be realized. For this reason, the digital recording and reproducing apparatus has a large number of special reproducing functions.

In order to realize the specific reproducing functions, contents recorded on an HDD or the like must be partially read and subjected to a decode process. More specifically, an operation that stops transfer of a TS read at the present to the decoder and reads the TS from a position where the next reproduction is performed to transfer the TS to the decoder is performed.

An MPEG TS packet has an information storing area called continuity_counter (circulating counter). The continuity_counter can obtain values of 0 to 15. The MPEG TS packet has such a rule that, when the values of the continuity_counter of continuous MPEG TS packets are matched with each other, the after MPEG TS packet may be discarded.

For this reason, in special reproduction, the value of the continuity_counter of the MPEG TS packet when the transfer to the decoder is stopped is matched with a value of the continuity_counter of the MPEG TS packet read from the position where the next production is performed, the MPEG TS packet to be reproduced next is discarded, and video image and audio data are not output.

Jpn. Pat. Appln. KOKAI Publication No. 2000-165361 discloses a configuration in which TS packets selected by packet selecting means from an input TS and determined to be necessary by data analyzing means are replaced by data replacing means such that the values of continuity_counter of the TS packets are continuous, so that the continuous TS packets are prevented from having equal values of continuity_counter.

The present invention has been made in consideration of the above circumstances, and an object of the invention is to provide a signal processing apparatus and a signal processing method which can realize a reliable special reproducing operation which is sufficiently suitable for practical use with a simple configuration.

According to one aspect of the present invention, there is provided a signal processing apparatus comprising: a reading unit configured to read a value of a circulating counter described in a TS packet to be input; a storing unit configured to store a comparative value to be compared with the value of the circulating counter read by the reading unit; a comparing unit configured to determine whether or not the comparative value stored in the storing unit is matched with the value of the circulating counter read by the reading unit in comparison and to update the comparative value of the storing unit into the value of the circulating counter read by the reading unit; an output unit configured to output the input TS packet when mismatching is determined by the comparing unit and to stop outputting of the input TS packet when matching is determined by the comparing unit; and a control unit which controls the output unit to output the input TS packet when a process in which the TS packets to be input are discontinuous.

According to another aspect of the present invention, there is provided a signal processing method comprising: a first step of reading a value of a circulating counter described in a TS packet to be input; a second step of comparing the value of the circulating counter read in the first step with a comparative value stored in the storing unit to determine whether or not the values are matched with each other and updating the comparative value of the storing unit to the value of the circulating counter read in the first step; a third step of outputting the input TS packet when mismatching is determined in the second step and stopping outputting of the input TS packet when matching is determined in the second step; and a fourth step of performing control to output the input TS packet when a process in which the TS packet to be input is discontinuous is requested.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing an embodiment of the invention to explain an outline of a digital recording and reproducing apparatus;
FIG. 2 is a diagram shown to explain a stream structure of a TS in the embodiment;
FIG. 3 is a diagram shown to explain a format of a TS packet in the embodiment;
FIG. 4 is a diagram shown to explain a format of a PES packet in the embodiment;
FIG. 5 is a diagram shown to explain a stream ID of the PES packet in the embodiment;
FIG. 6 is a block diagram shown to explain a determination process unit included in a TS demultiplexing unit of the digital recording and reproducing apparatus in the embodiment; and
FIG. 7 is a flow chart shown to explain an operation of the determination process unit included in the TS demultiplexing unit of the digital recording and reproducing apparatus in the embodiment.

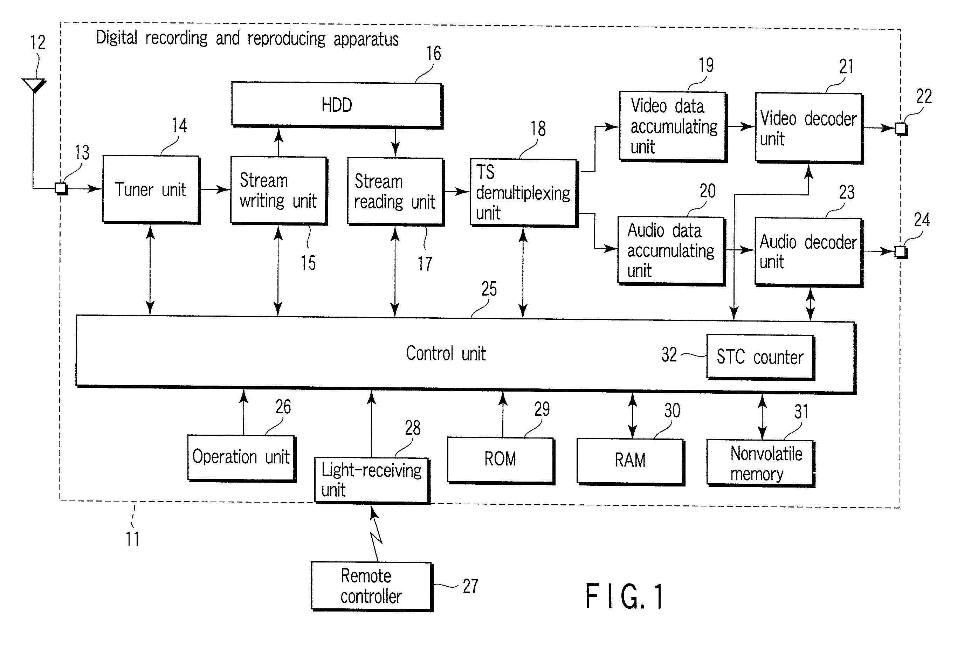

An embodiment of the present invention will be described below with reference to the accompanying drawings. FIG. 1 shows an outline of a digital recording and reproducing apparatus 11 explained in the embodiment. More specifically, an MPEG TS received by an antenna 12 is recorded on an HDD 16 through an input terminal 13, a tuner 14, and a stream writing unit 15.

The MPEG TS recorded on the HDD 16 is read by a stream reading unit 17 and supplied to a TS demultiplexing unit 18. In the TS demultiplexing unit 18, data included in the MPEG TS are classified by types. Video data is accumulated in a video data accumulating unit 19, and audio data is accumulated in an audio data accumulating unit 20.

Data except for the video data and the audio data is also multiplexed on the MPEG TS. The digital recording and reproducing apparatus 11 includes data accumulating units for data of types. However, in the embodiment, all the data accumulating units are omitted for descriptive convenience.

The video data accumulated in the video data accumulating unit 19 is read by a video decoder unit 21 which performs a decode (decoding) process to MPEG data and subjected to the decode process. Thereafter, the video data is supplied to, for example, an external display (not shown) or the like through an output terminal 22 to serve to display a video image.

The audio data accumulated in the audio data accumulating unit 20 is read on the audio decoder unit 23 which performs a decode (decoding) process to MPEG data and is subjected to the decode process. Thereafter, the video data is supplied to, for example, an external loudspeaker (not shown) through an output terminal 24 to serve for reproduction of voice.

In the digital recording and reproducing apparatus 11, all operations including the receiving operation and the recording/reproducing operation are overall controlled by a control unit 25. The control unit 25 includes a central processing unit (CPU) or the like, receives operation information from an operation unit 26 or receives operation information sent from a remote controller 27 through a light-receiving unit 28, and controls the respective units to reflect the operation contents of the operation information.

In this case, the control unit 25 mainly uses a read only memory (ROM) 29 in which a control program executed by the CPU is stored, a random access memory (RAM) 30 which provides a work area to the CPU, and a nonvolatile memory 31 in which various pieces of setting information, control information, and the like are stored.

The control unit 25 includes a system time clock (STC) counter 32 built therein. In the decode process and the like in the video decoder unit 21 and the audio decoder unit 23, a synchronizing process is performed by using an output from the STC counter 32. A detailed explanation of the synchronizing process will be omitted.

In this case, a stream structure (hierarchical structure) and a packet format of an MPEG TS will be described below. More specifically, in an MPEG TS packet (packet of a first layer in an extended sense), an I (intra) picture (in-frame coded video image in an extended sense), a P (predictive) picture, a B (bidirectionally predictive) picture (inter-frame forward predictive coding video and bidirectional predictive coding video in an extended sense), audio data (non-video data), and the like are multiplexed to one bit stream and packetized.

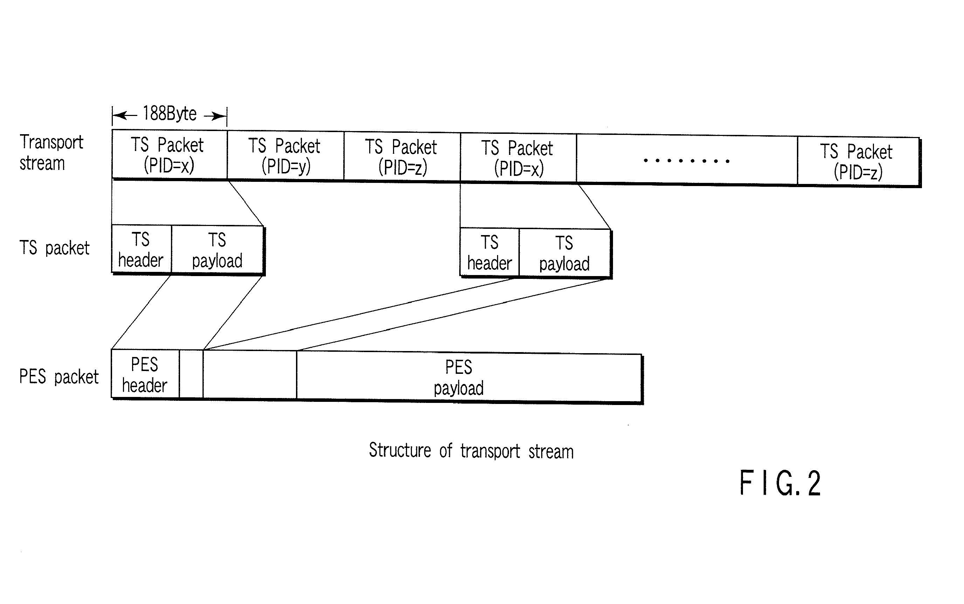

As shown in FIG. 2, in the MPEG TS, a packetized elementary stream (PES) packet (packet of a second layer in an extended sense) is constructed by connection of payload (payload unit and data unit) of a TS packet. More specifically, payload of a TS packet having packet identification (PID) is combined to constitute a variable-length PES packet constituted by a PES header and a PES payload.

In this case, an ES (elementary stream) serves as a constituent element of contents such as video or audio contents. The ES added with a header is called a PES. In MPEG2, multiplexing streams of two types, i.e., a TS and a PS (program stream) are defined as streams for multiplexing the PES. Of the multiplexing streams, the TS is a stream obtained by continuing TS packets having fixed lengths of 188 bytes.

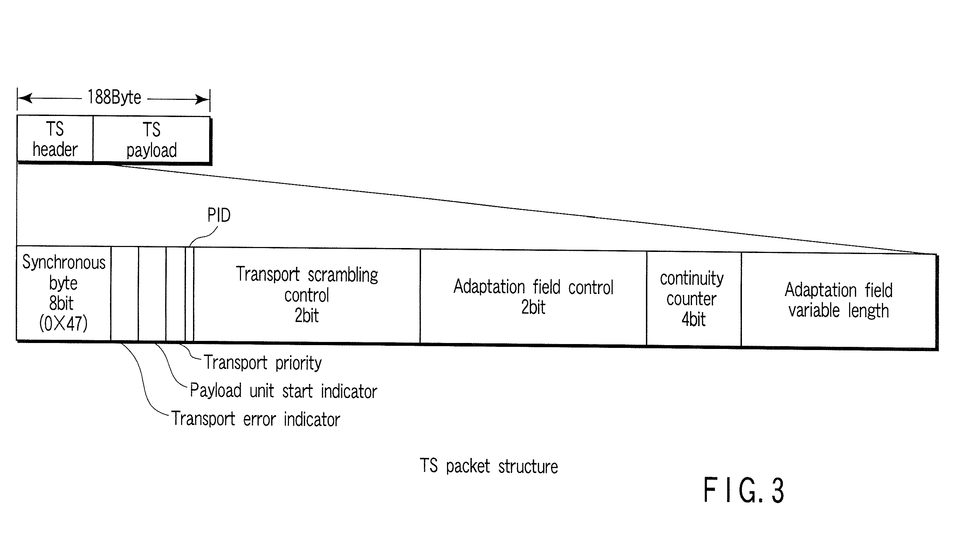

FIG. 3 shows a format of a TS packet. The TS packet is constituted by a TS header (header unit) and a TS payload (payload unit). The TS header has a synchronous byte (sync byte), a transport error indicator, a payload unit start indicator (PUSI), a transport priority, PID, transport scrambling control, adaptation field control, a continuity_counter, an adaptation field, and the like.

By using the PID included in the TS header, TS packets can be discriminated from each other. The PES is divided into TS packets each having the same PID, and the TS packets are arranged and transmitted. On the receiving side, the payloads of the TS packets each having the same PID are connected to each other to make it possible to recover an original PES.

The PID included in the TS header is information that simply discriminates TS packets from each other, and does not include information representing a specific program selected from a plurality of programs, a specific packet extracted from a plurality of packets, and a specific manner of decoding the packet. The pieces of information are transmitted by using a table called a PSI (program specific information). In the PSI, five tables, i.e., a PAT (program association table), a PMT (program map table), an NIT (network information table), a CAT (conditional access table), and a TSDT (transport stream description table) are defined.

The PES packet is divided into payloads of TS packets each having the same PID, and the payloads are transferred. However, the start of the PES packet is arranged such that the transfer is started from the start of the TS payload. The TS payload arranged at the start of the PES packet is discriminated by the payload unit start indicator shown in FIG. 3.

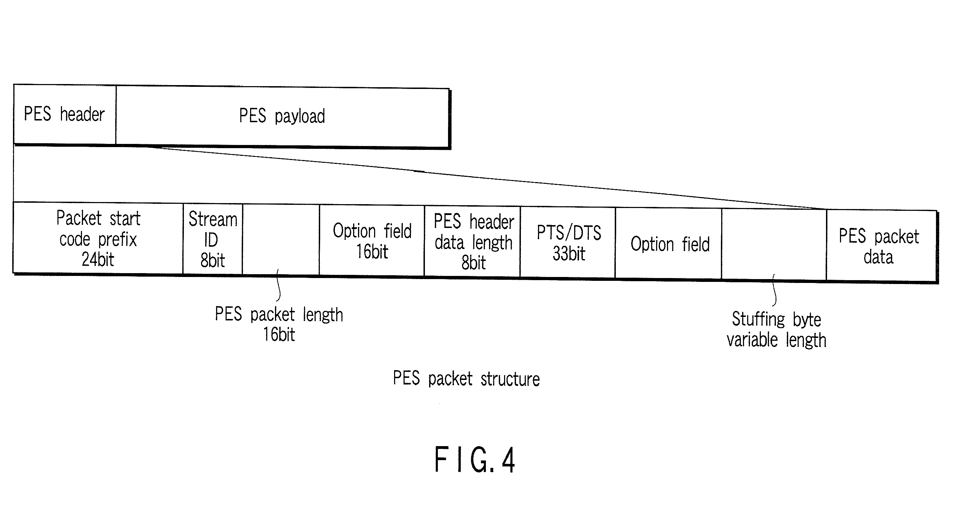

FIG. 4 shows a format of the PES packet. The PES packet is a variable-length packet constituted by a variable-length PES header and a PES payload (PES packet data byte).

In FIG. 4, a 24-bit packet start code prefix (0x000001) is a code representing the start of the PES packet. An 8-bit stream ID subsequent to the packet start code prefix is information for discriminating types of streams (expression media) carried by the PES payload from each other.

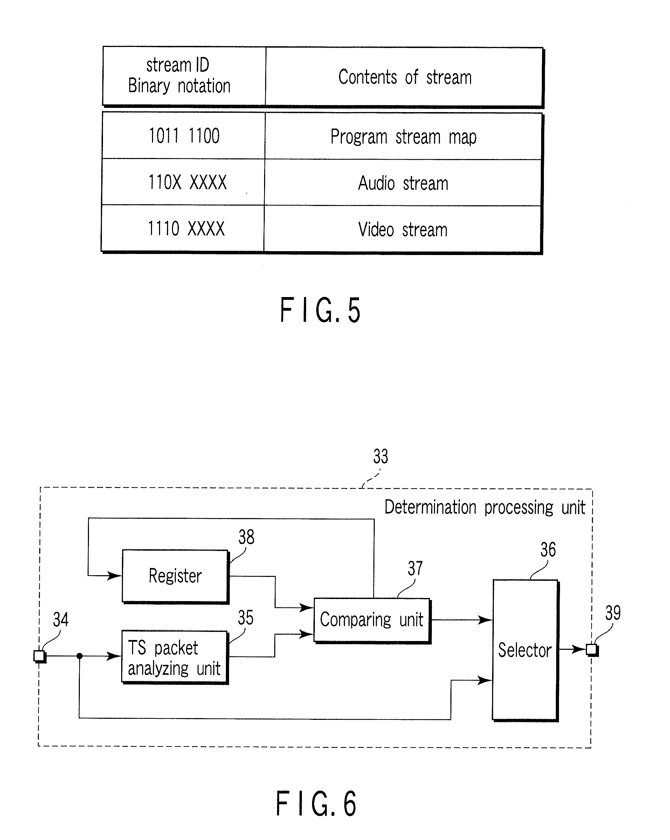

By the stream ID, it can be decided whether the stream of the PES payload is an audio stream or a video stream as shown in FIG. 5. A notation "x" means a bit (don't care bit) which may be any one of "0" and "1".

A processing rule of the continuity_counter will be described below. ITU-T recommendation H.222. 0|ISO/IEC138818-1, that continuity_counter is defined as follows.

More specifically, the continuity_counter is a 4-bit field the value of which sequentially increases in units of continuous TS packets each having the same PID. The value of the continuity_counter is circulated from the maximum value to 0. The continuity_counter must not be increased when adaptation field control of a packet to which the continuity_counter belongs is "00" or "10".

In the TS, a double-transmitted packet can be transmitted as two continuous TS packets each having the same PID. The number of double-transmitted packets is only two. The double-transmitted packets have values of the continuity_counter matched with that of an original packet. The adaptation field control of the packet must be "01" or "11".

In the double-transmitted packet, the bytes of the original packets must be matched with each other. By way of exception, only when there is a program clock reference (PCR), a valid value must be coded.

When any one of a condition in which the value of the continuity_counter of a certain TS packet is different from the value of the continuity_counter in a previous TS packet having the same PID as that of the certain TS packet by 1 and a condition in which the value of the continuity_counter of the certain TS packet is not increased (the adaptation field control is set at "00" or "10" or the above double-transmitted packet) is satisfied, it is determined that the continuity_counters are continuous. As an index of continuity, discontinuity can be determined when a discontinuity_indicator is set at "1". In a null packet, the value of the continuity_counter is not defined.

The discontinuity of the value of the continuity_counter is indicated by using a discontinuity_indicator in an arbitrary TS packet. When discontinuity in an arbitrary TS packet of a PID which is not designated as a PCR_PID is true, the value of the continuity_counter of the packet may be discontinuous to a previous TS packet having the same PID.

When a discontinuous state is true, and when two continuous TS packets each having the same value of the continuity_counter and the same PID in which the adaptation field control is "01" or "11" are generated, the second packet may be discarded.

A demultiplexing processing unit for a TS packet may be constituted on the basis of the above rule. In this case, when TS packets each having the same value of the continuity counter are input in a TS packet process for the same PID in order to prevent a repetitive stream from being supplied to a decoder of the subsequent stage, the second packet is generally designed to be discarded and prevented from being output to the decoder.

FIG. 6 shows a configuration of a determining process unit 33 to determine whether or not TS packets each having the same value of the continuity_counter are continuously input and to discard the second packet when the TS packets are continuously input.

More specifically, the TS packets supplied to an input terminal 34 are supplied to a TS packet analyzing unit 35 and a selector 36. Of these units, the TS packet analyzing unit 35 reads the value of the continuity_counter of the input TS packet to supply the value to one input terminal of a comparing unit 37.

The comparing unit 37 compares the value of the continuity_counter supplied from the TS packet analyzing unit 35 with a comparative value stored in a register 38. When the values are not matched with each other, the selector 36 is controlled so that the TS packet supplied to the input terminal 34 is directly output from an output terminal 39.

The comparing unit 37 compares the value of the continuity_counter supplied from the TS packet analyzing unit 35 with the comparative value stored in the register 38. Thereafter, the value of the continuity_counter supplied from the TS packet analyzing unit 35 is stored in the register 38 as a new comparative value, i.e., the comparative value is updated to serve for the next comparison.

For this reason, when the value of the continuity_counter supplied from the TS packet analyzing unit 35 and the comparative value of the register 38 are "5" and a value except for "5", respectively, the selector 36 is controlled so that the TS packet supplied to the input terminal 34 is output from the output terminal 39, and the value "5" of the continuity_counter supplied from the TS packet analyzing unit 35 is stored in the register 38 as a comparative value.

Consequently, when values of the continuity_counter of TS packets to be supplied next to the input terminal 34 are continuous, "6" of the values is compared with the comparative value "5" of the register 38. Since the values are not matched with each other, the comparing unit 37 controls the selector 36 to output the TS packets supplied to the input terminal 34 from the output terminal 39, and also stores the value "6" of the continuity_counter supplied from the TS packet analyzing unit 35 in the register 38 as a comparative value.

In this manner, when the values of the continuity_counter of TS packets, TS packets supplied to the input terminal 34 are sequentially output from the output terminal 39 without matching the value of the continuity_counter supplied from the TS packet analyzing unit 35 with the comparative value of the register 38.

On the other hand, when the values of the continuity_counter of the TS packets continuously supplied to the input terminal 34 are equal to each other, the value of the continuity_counter is matched with the comparative value of the register 38 when the second TS packet is input. At this time, the comparing unit 37 controls the selector 36 to prevent the TS packet supplied to the input terminal 34 from being output from the output terminal 39. In this state, the second TS packet is discarded.

In this case, as described above, for example, when a special reproduction such as fast reproduction, jump to a target position, chapter skip, or A-B repeat is performed, a reproduction position of the TS packet from the HDD 16 is changed. For this reason, the stream is discontinuous, and values of the continuity_counter of TS packets to be supplied to the input terminal 34 become discontinuous.

In this case, the value of the continuity_counter of the TS packet obtained before the reproduction position is changed is matched with the value of the continuity_counter of the TS packet obtained after the reproduction position is changed, the comparing unit 37 performs control to prevent the TS packet obtained after the change from being output. For this reason, a video image and voice after the change are not output.

Since the continuity_counter is described as 4-bit data in the rules of MPEG, the values of the television broadcasting receiver ranges from 0 to 15, i.e., 16 types. Namely, the probability of matching the value of the continuity_counter of the TS packet reproduced before the reproduction position is changed with the value of the continuity_counter of the TS packet reproduced after the reproduction position is changed is 1/16. This value is a considerably practical difficulty.

Therefore, in the embodiment, the register 38 is constituted by 5 bits or more. When a reproducing operation in which the stream is discontinuous is required, the value of the continuity_counter of the TS packet obtained before the reproduction position is changed is compared with the comparative value in the register 38, and then, a value of "11111" (16 in decimal system) at which the continuity_counter cannot be set is forcibly stored in the register 38 without storing the value of the continuity_counter of the TS packet in the register 38.

In this manner, even though the value of the continuity_counter of the TS packet obtained after the reproduction position is changed is any one of 0 to 15, matching between the values is not detected by the comparing unit 37, and the TS packet obtained after the change is output from the output terminal 39 to serve for display of a video image and reproduction of voice.

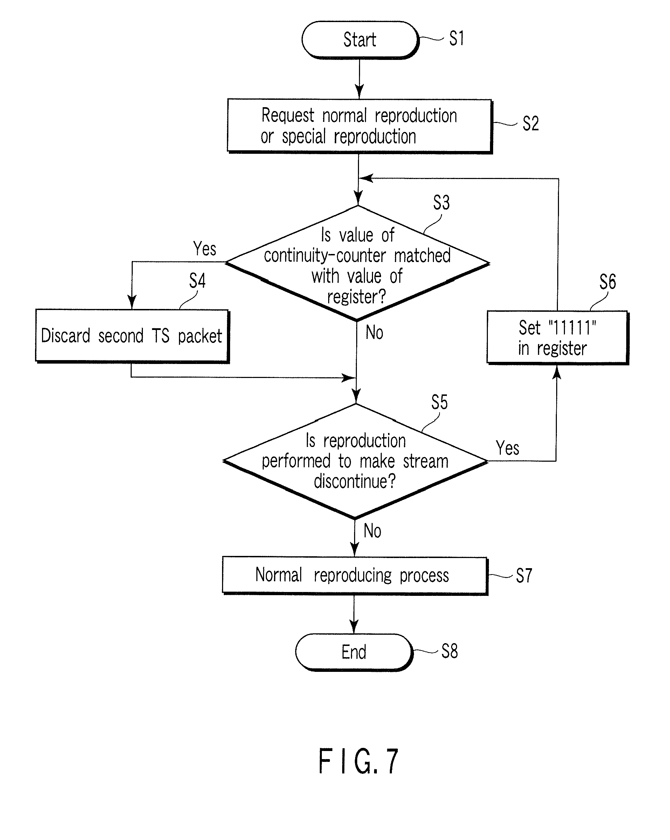

FIG. 7 shows a flow chart obtained by collecting operations of the determining process unit 33. More specifically, the process is started (step S1), and normal reproduction or special reproduction is required by a user in step S2. In this case, in step S3, it is determined whether or not the value of the continuity_counter of a TS packet reproduced at the present is matched with the comparative value of the register 38.

When it is determined that the values are matched with each other (YES), the second TS packet is discarded in step S4. After step S4, or when it is determined in step S3 that the value of the continuity_counter of the TS packet reproduced at the present is not matched with the comparative value of the register 38 (NO), it is determined in step S5 whether or not a reproducing operation in which a stream is discontinuous, i.e., an operation of changing a reproduction position is performed.

In this case, when it is determined that the reproducing operation in which the stream is discontinuous is performed (YES), a value "11111" is forcibly stored in the register 38 in step S6, and the control is returned to the process in step S3.

When it is determined in step S5 that the reproducing operation in which the stream is discontinuous is not performed (NO), a normal reproducing operation is executed in step S7 to end the process (step S8).

According to the embodiment, when a reproducing operation in which the stream is discontinuous is required, the value "11111" at which the continuity_counter cannot be set is forcibly stored as a comparative value in the register 38. For this reason, the TS packet obtained after the reproduction position is changed serves for display of a video image and reproduction of voice without being discarded. A reliable special reproducing operation which is sufficiently suitable for practical use can be realized with a simple configuration.

In addition, after the reproduction position is changed, a flag which resets the determining process unit 33 may also be set. More specifically, when the determining process unit 33 is reset, an input TS packet is unconditionally output from the output terminal 39 without performing a comparing operation by the comparing unit 37.

After the TS packet obtained after the reproduction position is changed is output from the output terminal 39, the flag representing a reset state is negated. In the negate state of the flag, the determining process unit 33 execute a normal comparing operation. In this manner also, display of a video image and reproduction of voice can be performed without stopping the output of the TS packet after the change.

Furthermore, the value of the continuity_counter at the start of a stream obtained after the reproduction position is changed is detected, and a value except for the value of the continuity_counter can also be set as a comparative value in the register 38. More specifically, when the PID of a stream to be reproduced next is matched with the PID of the stream reproduced at the present, the value of the continuity_counter of the start packet of the PID is read, and a value except for the read value is set as a comparative value in the register 38.

More specifically, when data reproduced at the present includes video data and audio data, the values of the continuity_counter of the start packets having the PIDs of the video data and the audio data are read from a stream position where reproduction should be performed next, a value ranging from 0 to 15 different from the read values is set in the register 38. By doing this, the value of the continuity_counter of the TS packet to be reproduced next is not matched with the comparative value of the register 38, and the TS packet is not discarded.

A concrete operation performed when chapter skip is performed as an example of special reproduction will be described below. When a predetermined content is reproduced from the HDD 16, a user operates the operation unit 26 or the remote controller 27 to request the chapter skip. At this time, in response to the chapter skip request, the control unit 25 controls the stream reading unit 17 to stop reading of a stream. The control unit 25 also controls the decoder units 21 and 23 to stop the decode processes.

After the control unit 25 confirms that the processes of the stream reading unit 17 and the decoder units 21 and 23 are stopped, a position where reproduction should be performed next is retrieved. At this time, since the reproduction position is changed, the control unit 25 performs a process such as storing a value "11111" in the register 38. Thereafter, the decoder units 21 and 23 are started to designate the stream reading unit 17 to start reading of a stream from the start of a chapter. In this manner, reproduction of the chapter designated by a user is stably executed.

The invention is not directly limited by the embodiments. In an execution phase, various changes of the constituent elements can be concretized without departing from the spirit and scope of the invention. When a plurality of constituent elements disclosed in the embodiment are properly combined to make it possible to form various inventions. For example, several constituent elements may be omitted from all the constituent elements described in the embodiment. Furthermore, the constituent elements according to the different embodiments may be properly combined to each other.

## Claims

1. A signal processing apparatus **characterized by** comprising:
a reading unit (35) configured to read a value of a circulating counter (continuity_counter) described in a TS packet to be input;
a storing unit (38) configured to store a comparative value to be compared with the value of the circulating counter (continuity_counter) read by the reading unit (35);
a comparing unit (37) configured to determine whether or not the comparative value stored in the storing unit (38) is matched with the value of the circulating counter (continuity_counter) read by the reading unit (35) in comparison and to update the comparative value of the storing unit (38) into the value of the circulating counter (continuity_counter) read by the reading unit (35);
an output unit (36) configured to output the input TS packet when mismatching is determined by the comparing unit (37) and to stop outputting of the input TS packet when matching is determined by the comparing unit (37); and
a control unit (25) which controls the output unit (36) to output the input TS packet when a process in which the TS packets to be input are discontinuous.

2. The signal processing apparatus according to claim 1, **characterized in that**
the control unit (25) is configured such that a value at which the circulating counter (continuity_counter) is not set is stored in the storing unit (38) as a comparative value.

3. The signal processing apparatus according to claim 1, **characterized in that**
the control unit (25) is configured to set a reset state in which the input TS packet is unconditionally output from the output unit (36).

4. The signal processing apparatus according to claim 1, **characterized in that**
the control unit (25) is configured to store a value different from a value of a circulating counter (continuity_counter) of a TS packet to be input next in the storing unit (38) as a comparative value.

5. A signal processing method **characterized by** comprising:
a first step (35) of reading a value of a circulating counter (continuity_counter) described in a TS packet to be input;
a second step (37) of comparing the value of the circulating counter (continuity_counter) read in the first step (35) with a comparative value stored in the storing unit (38) to determine whether or not the values are matched with each other and updating the comparative value of the storing unit (38) to the value of the circulating counter (continuity_counter) read in the first step (35);
a third step (36, S3, S4) of outputting the input TS packet when mismatching is determined in the second step (37) and stopping outputting of the input TS packet when matching is determined in the second step (37); and
a fourth step (25, S5, S6) of performing control to output the input TS packet when a process in which the TS packet to be input is discontinuous is requested.

6. The signal processing method according to claim 5, **characterized in that**
in the fourth step (25, S5, S6), a value at which the circulating counter (continuity_counter) cannot be set is stored in the storing unit (38) as a comparative value.

7. The signal processing method according to claim 5, **characterized in that**
in the fourth step (25, S5, S6), a reset state in which the input TS packet is unconditionally output is controlled.

8. The signal processing method according to claim 5, **characterized in that**
in the fourth step (25, S5, S6), a value different from the value of the circulating counter (continuity_counter) of a TS packet to be input next is stored in the storing unit (38) as a comparative value.

9. An information reproducing apparatus **characterized by** comprising:
a receiving unit (17) configured to receive a TS;
a separating unit (18) configured to separate a predetermined TS packet from the TS received by the receiving unit (17);
a reading unit (35) configured to read the value of the circulating counter (continuity_counter) described in the TS packet separated by the separating unit (18);
a storing unit (38) configured to store a comparative value to be compared with the value of the circulating counter (continuity_counter) read by the reading unit (35);
a comparing unit (37) configured to compare the comparative value stored in the storing unit (38) with the value of the circulating counter (continuity_counter) read by the reading unit (35) to determine whether or not the values are matched with each other and to update the comparative value of the storing unit (38) to the value of the circulating counter (continuity_counter) read by the reading unit (35);
an output unit (36) configured to output the TS packet separated by the separating unit (18) when mismatching is determined by the comparing unit (37) and to stop outputting of the TS packet when matching is determined by the comparing unit (37); and
a control unit (25) which performs control to output the TS packet separated by the separating unit (18) from the output unit (36) when a process in which the TS packet is discontinuous is requested.
